**Europäisches Patentamt**

**European Patent Office**

**Office européen des brevets**

(19)

(11) Veröffentlichungsnummer: **0 373 522 B1**

(12)
# EUROPÄISCHE PATENTSCHRIFT

(45) Veröffentlichungstag der Patentschrift: **25.08.93**

(21) Anmeldenummer: **89122634.2**

(22) Anmeldetag: **08.12.89**

(51) Int. Cl.⁵: **B23K 11/36**, F15B 21/08

(54) **Werkzeugbetätigungszylinder mit Steuerventil.**

(30) Priorität: **12.12.88 DE 3841765**

(43) Veröffentlichungstag der Anmeldung:
**20.06.90 Patentblatt 90/25**

(45) Bekanntmachung des Hinweises auf die
Patenterteilung:
**25.08.93 Patentblatt 93/34**

(84) Benannte Vertragsstaaten:
**DE ES FR GB IT**

(56) Entgegenhaltungen:
**DE-A- 1 523 391**
**DE-A- 3 222 397**
**GB-A- 2 100 473**

(73) Patentinhaber: **Kolben-Seeger GmbH & Co KG**
**Mergenthalerallee 39-43**
**D-65760 Eschborn(DE)**

(72) Erfinder: **Bornschein, Rolf Dieter Dipl.Ing.**
**Sossenheimer Weg 14**
**D-6230 Frankfurt/Main 80(DE)**

(74) Vertreter: **Wolf, Günter, Dipl.-Ing.**
**Postfach 70 02 45**
**D-63427 Hanau (DE)**

## Beschreibung

Die Erfindung betrifft einen Werkzeugbetätigungszylinder mit Steuerventil, insbesondere für die Betätigung von Schweißelektroden gemäß Oberbegriff des Hauptanspruches (siehe DE-C-36 30236).

Werkzeugbetätigungszylinder der genannten Art sind allgemein bekannt und in Benutzung. Nach der DE-AS 26 51 624 ist ein Penumatikantrieb bekannt, bei dem eine Dämpfungseinrichtung verschleißreduzierend wirken soll, und außerdem soll sich das beim Aufsetzen der Schweißelektrode auf das Werkstück einstellende Geräusch in vertretbaren und erträglichen Grenzen halten. Dieser speziellen Aufgabenstellung ist dabei auch im wesentlichen genügt, was jedoch mit einem beträchtlichen Bauaufwand erzielt wird, wobei abgesehen von der Druckmediumszuleitung und einer mit Rückschlagventil versehenen Rückströmleitung alle weiteren notwendigen Elemente in die Kolben mit einbezogen sind. Um die gewünschte Funktion erfüllen zu können, sind zwei Rückschlagventile, längs und quer gebohrte Leitungen in den Kolben und in der verbindenden Kolbenstange notwendig, und außerdem ist ein fingerartig dem oberen Kolben aufgesetzter Kolben für das gedämpfte Heranfahren des Werkzeuges an das Werkstück erforderlich. Noch aufwendiger und komplizierter im Aufbau ist ein Zylinder nach der DOS 22 58 593 ausgebildet und ebenso eine Kolben-Zylinder-Anordnung nach der DE-OS 35 42 069. Eine Einrichtung zum Steuern eines doppeltwirkenden pneumatischen Kraftzylinders gemäß DE-PS 36 30 236 ist zwar für einen Zylinder einfachster Bauart gemäß eingangs genannter Art bestimmt, dabei ist aber ein außerordentlich aufwendiger und komplizierter Ventilblock erforderlich, der zwischen dem Steuerventil und dem Zylinder eingeschaltet ist.

Der Erfindung liegt demgemäß die Aufgabe zugrunde, ausgehend von einem Betätigungszylinder der eingangs genannten, also einfachsten Bauart, diesen mit einfachsten Mitteln und insbesondere handelsüblichen Ventilen dahingehend auszubilden, daß das am freien Ende der Kolbenstange angeordnete Werkzeug, insbesondere Schweißelektrode, gedämpft auf dem Werkstück aufgesetzt werden kann, um Stoßbelastungen zu vermeiden, die sonst zu hohem Elektrodenverschleiß und starker Geräuschbildung führen.

Diese Aufgabe ist mit einem Werkzeugbetätigungszylinder der eingangs genannten Art nach der Erfindung durch die im Kennzeichen des Hauptanspruches angeführten Merkmale gelöst. Vorteilhafte Weiterbildungen ergeben sich nach den Unteransprüchen.

Bei dieser erfindungsgemäßen Ausbildung erhält der Betätigungszylinder während seines bereits eingeleiteten Arbeitshubes einen impulsförmigen Druckstoß, der auf die Kolbenfläche des Rückhubraumes wirkt. Durch diesen impulsförmigen Druckstoß wird die Kolben-Kolbenstangeneinheit mehr oder weniger kurz vor ihrem Aufsetzen auf dem Werkzeug abgebremst, so daß es zu einem sanften Aufsetzen des Werkzeuges bzw. der Schweißelektrode kommt. Um dies bewirken zu können, sind dafür lediglich das sowieso erforderliche Steuerventil und zwei ebenfalls handelsübliche 2/2-Ventile erforderlich und ein weiterer Anschluß am Rückhubraum, der jedoch lediglich als Gegendruckimpulsanschluß dient. Um den Gegendruckimpuls auszulösen, ist ferner lediglich ein Impulsgeber am Zylinder vorzusehen und an der Kolben-Kolbenstangeneinheit eine entsprechender Geber, der, entsprechend eingestellt, bei Bewegung der Kolbenstange am Impulsgeber vorbeigeführt wird und von diesem aus über den Antrieb des weiteren Steuerventiles den Gegendruckimpuls auslöst.

Für die Anbringung des Gebers ist, da am wenigsten aufwendig, am freien Ende der Kolbenstange ein Traggestänge angeordnet, das außerdem die einfache Möglichkeit bietet, den Geber am Traggestänge verstellen zu können. Das Traggestänge ist dabei vorteilhaft seitlich an der Außenwand des Zylinders und am dort angeordneten Impulsgeber vorbeiführend angeordnet und ausgebildet. Zweckmäßig wird dabei seitlich am Zylinder eine das Traggestänge mit dem Geber und den Impulsgeber abdeckende Abschirmhülse angeordnet sein.

Die gestellte Aufgabe, deren Lösung bei den vorerwähnten Ausführungsformen eine sogenannte Rückraumpufferung zugrundeliegt, kann auch noch, davon unabhängig, auf andere Weise gelöst werden, nämlich - ebenfalls unter Verwendung handelsüblicher Ventile - nach dem sogenannten Differenzdruckprinzip gemäß Anspruch 7.

Alternative Lösungen werden in den Ansprüchen 2 und 8 angegeben, wobei die zwei 2/2 Ventile zu einem 3/2-Ventile ebenfalls handelsüblicher Art zusammengefaßt werden.

Die erfindungsgemäßen Werkzeugbetätigungszylinder werden nachfolgend anhand der zeichnerischen Darstellung von Ausführungsbeispielen näher erläutert.

Es zeigt schematisch

Fig. 1      den Werkzeugbetätigungszylinder mit den zugehörigen Ventilen;

Fig. 2      den Werkzeugbetätigungszylinder gemäß Fig. 1 in anderer Ausführungsform bezügl. der zugeordneten Ventile;

Fig. 3      den Werkzeugbetätigungszylinder in bevorzugter Ausführungsform mit Doppelkolben und den zugeordneten Ventilen und

Fig. 4    den Werkzeugbetätigungszylinder gemäß Fig. 3 in anderer Ausführungsform bezgl. der zugeordneten Ventile.

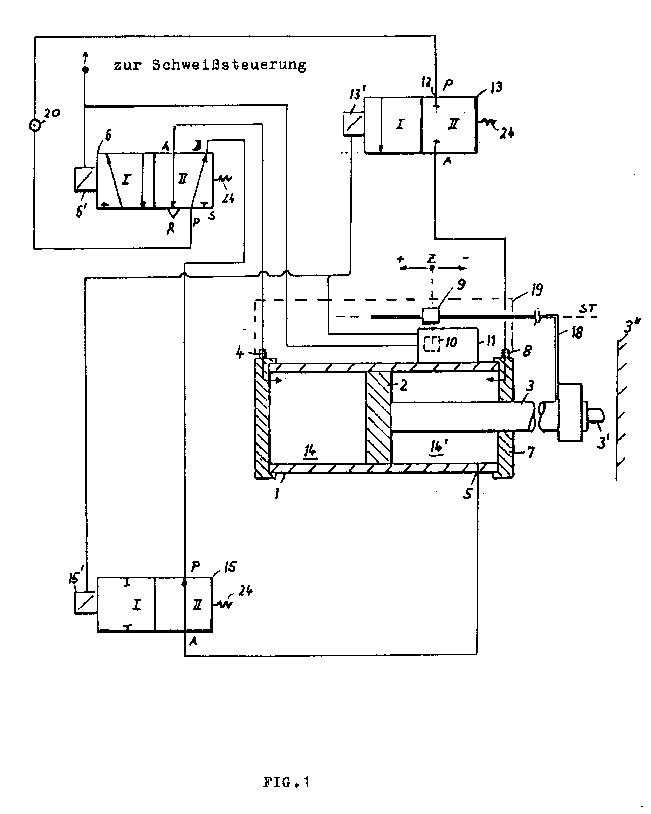

Wie ersichtlich, besteht der Werkzeugbetägungszylinder gemäß Fig. 1 aus dem Zylinder 1
mit Kolben 2 und einseitig aus- und einfahrbarer
Kolbenstange 3, wobei der Zylinder 1 mit ventilgesteuerten Betriebsmittelzu- und -abfuhranschlüssen
4, 5 versehen ist, die mit dem Steuerventil 6 verbunden sind, das seinerseits mit dem Drucknetz 20
in Verbindung steht. Dieses Steuerventil 6 ist ein
handelsüblich erhältliches sogenanntes 5/2-Steuerventil (fünf Zu-und Abgänge/ zwei Arbeitsstellungen
) . Um die vorbeschriebene Dämpfungswirkung am
Ende des Arbeitshubes bewirken zu können, ist am
kolbenstangenseitigen Verschluß 7 des Zylinders 1
ein einerseits mit einem weiteren, ebenfalls handelsüblichen Pufferventil 13 und andererseits mit
dem Rückhubraum 14 des Zylinders 1 in Verbindung stehender Gegendruckimpulsanschluß 8 und
im Stellweg ST des an der Kolben-Kolbenstangeneinheit 2, 3 angeordneten Gebers 9 ein mit dem
Antrieb 13' des Pufferventils 13 in Verbindung stehender Impulsgeber 11 angeordnet. Für die Halterung des Gebers 9 ist dabei am freien Ende der
Kolbenstange 3, an dem auch die Schweißelektrode 3' befestigt ist, das Traggestänge in geeigneter
Weise befestigt, wobei, wie angedeutet, der Geber
9 am Traggestänge 18 verstellt bzw. eingestellt
werden kann. Zweckmäßig ist dabei das Traggestänge 18, winklig ausgebildet und damit seitlich an
der Außenwand des Zylinders 1 und am dort angeordneten Impulsgeber 11 vorbeiführend angeordnet
und ausgebildet. Um diese Elemente in ihrer seitlichen Anordnung am Zylinder 1 keinen äußeren
Beeinträchtigungen auszusetzen, ist vorteilhaft seitlich am Zylinder eine das Traggestänge 18 mit
dem einstellbaren Geber 9 und den Impulsgeber
11 abdeckende Abschirmhülse 19 vorgesehen, die
nur gestrichelt angedeutet ist. Die dargestellte berührungslose Zuordnung des Gebers 9 zum Impulsgeber 11 zwecks Initiierung des Druckstoßes
kann natürlich auch durch mechanischen Direktkontakt erfolgen, wobei in beiden Fällen die Verstellbarkeit des Gebers 9 zur definierten Anwahl
des Schaltpunktes in Hubrichtung (Z) dient. Die
Impulsbreite, d.h., die zeitlich Länge der Ansteuerung des Ventils 13, is ebenso wahlweise mechanisch oder elektronisch bspw. mittels eines Zeitgliedes 10 im Impulsgeber justierbar. Damit kann
variablen Massen an der Kolbenstange Rechnung
getragen werden. Abgesehen davon dient sie
gleichzeitig zur Feinabstimmung von veränderlichen Hubvolumina, sowie zur Anpassung an die
ventil- und leistungsbezogenen Durchflußkennwerte. Nicht dargestellt ist die mögliche Anordnung
des Gebers 9 direkt am Kolben 2, wobei dann aber
der Impulsgeber 11 verstellbar gehalten werden müßte, sofern eine solche Einstellbarkeit gewünscht wird. Zu dieser Anordnung gehört noch
bei dieser Ausführungsform das ebenfalls handelserhältliche 2/2-Sperrventil 15 zur Absperrung der
Rückraumentlüftung.

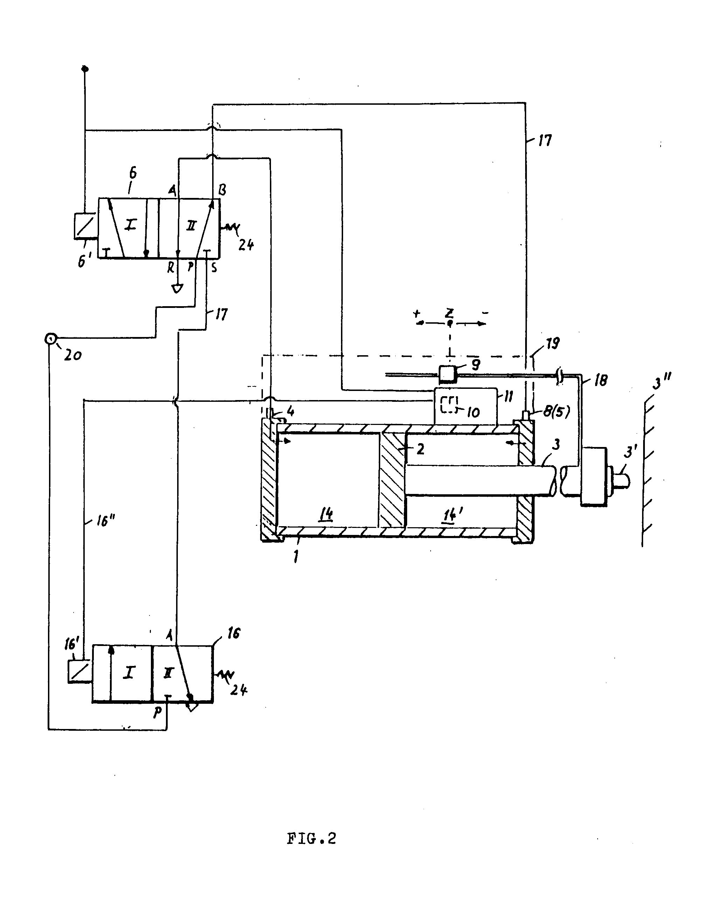

Der Zylinder 1 mit den mit ihm durch Druckleitungen verbundenen Ventilen 6, 13, 15, deren Antriebe 6', 13', 15' gemeinsam mit der zugehörigen
Schweißsteuerung (nicht dargestellt) verbunden
sind, arbeitet wie folgt: Zum Ausfahren der Kolbenstange 3 in Arbeitsstellung erhält der Antrieb 6'
einen Steuerimpuls von der Schweißsteuerung, wodurch das Ventil 6 gegen den Druck seiner Feder
24 verstellt und der Arbeitsraum 14 beaufschlagt
wird. Der Kolben 2 fährt dabei die Kolbenstange 3
mit dem Werkzeug 3' (hier Schweißelektrode) in
Richtung auf das Werkstück 3″. Je nach Einstellung
des Gebers 9 und des Zeitgliedes 10 wird dabei in
gewünschtem Abstand vor dem Werkstück 3″ ein
Steuerimpuls auf die Antriebe 13', 15' der Ventile
13, 15 gegeben, die dadurch ebenfalls gegen den
Druck ihrer Feder 24 verstellt werden. Damit wird
über Ventil 13 der Rückhubraum 14' mit Gegendruck beaufschlagt und die Entlüftung (Anschluß
5) zum Steuerventil gesperrt, d.h., durch diesen
Gegendruckimpuls wird das Werkzeug 3' gedämpft
auf das Werkstück 3″ aufgesetzt. Nach Abschluß
des Schweißvorganges stellt ein Impuls der Hauptsteuerung alle Ventile 6, 13, 15 wieder in die dargestellte Position zurück, so daß jetzt der Rückhubraum 14' über Ventil 15 beaufschlagt und der
Arbeitsraum 14 über Ventil 6 entlastet werden
kann,
Bei der Ausführungsform gemäß Fig. 2 spielt sich
das gleiche ab. Hierbei sind allerdings die Ventile
13, 15 zu einem 3/2-Ventil 16 zusammengefaßt,
wobei jedoch die Leitung 17 zunächst als Entlastungsleitung für den Rückhubraum 14', dann als
Gegendruckimpulsleitung und dann als Rückhubbeaufschlagungsleitung dient. Der Antrieb 16' des
Ventils 16 wird hierbei über die Leitung 16″ vom
Impulsgeber 11 aus angesteuert.

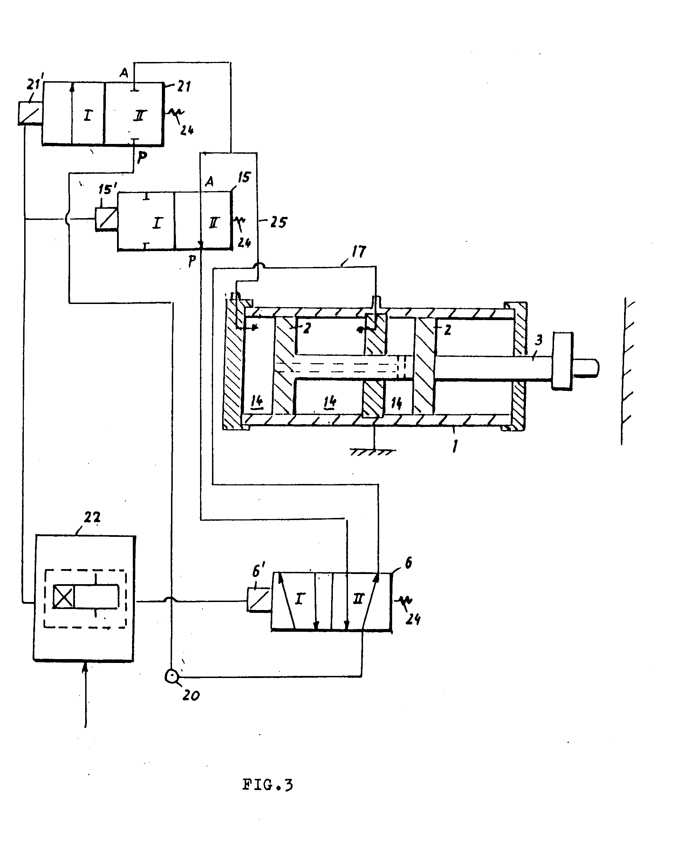

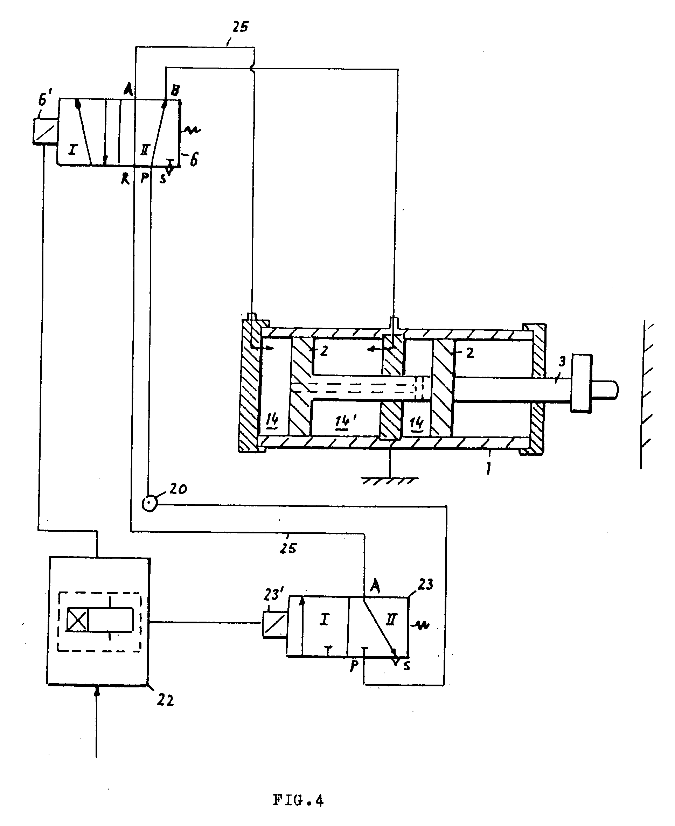

Die Ausführungsformen nach den Fig. 3, 4
arbeiten nicht auf Basis eines Gegendruckimpulses, sondern auf Basis der Druckdifferenz und sind
insbesondere, wie dargestellt, für Zylinder 1 mit
Doppelkolben bzw. für mehrstufige, kurzhubige
Kleinzylinder bestimmt, da dabei der Druckdifferenzbereich größer ist. Zur Zeit $t_1$ erhält das Steuermodul 22 ein Spannungssignal von der Schweißsteuerung. Dieses Signal wird direkt auf die beiden
2/2-Ventile 15, 21 weitergeleitet. Steuerventil 6
bleibt in Nullstellung. Ventil 15 sperrt die Arbeitsleitung 25 des Zylinders in Richtung Ventil 6. Ventil
21 beaufschlagt mit vorwählbarem Nutzdruck den
Arbeitsraum 14. Da bei mehrstufigen Zylindern die
Rückhubflächen kleiner als die Arbeitshubflächen
ausgelegt sind, ergibt sich bei geeigneter Vorwahl der Eingangswerte für $P_{Netz}$ an den Ventilen 6, 21 ein Drucküberschuß auf der Arbeitshubseite des Zylinders und die Kolbenstange 3 fährt mit einem def. $\ddot{X}$ aus. Die Zeitdifferenz zwischen Startsignal und Aufsetzen der Kolbenstange 3 ist $\Delta t$. Das Steuerventil 6 wird mit dieser Zeitverzögerung $\Delta t$ zum Zeitpunt $t_2 = t_1 + \Delta t$ angesteuert. Zur Zeit $t_2$ werden die Ventile 15, 21 abgeschaltet, so daß der Arbeitsraum 14 über Ventil 6 mit Nenndruck beaufschlagt werden kann. Der Rückraum 14' wird dabei gleichzeitig über Leitung 17 und Ventil 6 auf Umgebungsdruck $P_0$ entlüftet.

Beim Ausführungsbeispiel nach Fig. 4 sind die Ventile 15, 21 durch ein 3/2-Ventil 23 ersetzt. Dieses liegt mit seiner Arbeitsleitung 25, die in Nullstellung gegen P verschlossen ist, am Abluftanschluß R des 5/2-Wege-Ventils 6 . Die Ansteuerung der Ventile 6, 23 erfolgt analog zu Fig. 3, wie vorbeschrieben, d.h., bei Ansteuerung von 8 bzw. 8' zur Zeit $t_1$ befindet sich Ventil 6 in Nullstellung, dessen Antrieb 6'zur Zeit $t_2 = t + t_1$ angesteuert wird, wobei Ventil 23 abgeschaltet wird und in Nullstellung geht.

Die Ausführungsformen nach Fig.1 und 3 sind insbesondere für sogenannte Zylinderbatterien bestimmt, bei denen ein Steuerventil 6 mehrere Zylinder versorgt. Die Einschleifung der Dämpfungssteuerung erfolgt hier nach den Fig.1 oder 3, um einen speziellen Zylinder zu dämpfen. Die Ausführungsformen nach Fig.2 und 4 sind für Einzelzylinder bestimmt, bei denen mit einem Steuerventil 6 eine Einheit versorgt wird(bspw. Zylinderbetrieb in Roboterschweißzangen).

Die unterschiedlichen Schaltungskonzepte bieten die Möglichkeit, Standardzylinder je nach Einsatzbedingungen gedämpft betreiben zu können. Die durch die Ansprüche 2 und 8 definierten Schaltungen können dann eingesetzt werden, wenn die Schweißsteuerung ein 5/2-Ventil 6 anspricht und dieses wiederum einen speziellen Schweißzylinder ansteuert, wie dies bspw. bei Roboterschweißzangen der Fall ist. Hier wird werkseitig eine Komplettverschaltung mit allen zangenseitig notwendigen Steuermitteln vorgenommen. Die Steuerung spricht dann die Zange direkt an,und die Signalverarbeitung erfolgt an der Zange und nur für diese Zange. Hierbei kann das Dämpfungskonzept vor dem 5/2-Ventil 6 eingebaut werden, d.h., auf der R-P-S - Seite des Ventils 6. Ist demgegenüber eine Batterieschaltung von Zylindern vorgesehen, so muß auf der Ausgangsseite( A-B-Seite) des Ventils 6 das Dämpfungskonzept eingebaut werden, was zu der Notwendigkeit führt, daß beim Belüften des Rückhubraumes die Abluftleitung gesperrt werden muß. Daher ist in diesem Fall ein etwas höherer Schaltungsaufwand erforderlich, um den Einzelzylinder einer Zylinderbatterie zu dämpfen.

**Patentansprüche**

1. Werkzeugbetätigungszylinder mit Steuerventil, insbesondere für die Betätigung von Schweißelektroden, bestehend aus einem Zylinder (1) mit Kolben (2) und einseitig aus- und einfahrbarer Kolbenstange (3), wobei der Zylinder mit ventilgesteuerten Betriebsmittelzu- und - abfuhranschlüssen (4, 5) versehen ist, die mit einem 5/2- Steuerventil (6) verbunden sind, **gekennzeichnet durch** die folgenden Merkmale:

    1.1. am kolbenstangenseitigen Verschluß (7) des Zylinders (1) ist ein Gegendruckimpulsanschluß (8) angeordnet;

    1.2. am Zylinder (1) ist im Stellweg (ST) eines am Endbereich der Kolbenstange (3) angeordneten Gebers (9) ein mit Zeitglied (10) versehener Impulsgeber (11) angeordnet;

    1.3. der Gegendruckimpulsanschluß (8) steht mit einem mit Druckmediumsanschluß (12) versehenen 2/2-Pufferventil (13) und der Rückhubraum (14') mit einem mit dem 5/2-Steuerventil (6) verbundenen, entgegengesetzt schaltbaren 2/2-Sperrventil (15) in Verbindung, wobei der Antrieb (13') des 2/2-Pufferventils (13) und der Antrieb (15') des 2/2-Sperrventils (15) mit dem Impulsgeber (11) verbunden sind.

2. Zylinder nach Anspruch 1, **dadurch gekennzeichnet,** daß die Puffer- und Sperrventile(13, 15) zu einem 3/2-Ventil (16) zusammengefaßt ausgebildet sind, deren über das Steuerventil (6) führende Verbindungsleitung (17) zum Rückhubraum (14') des Zylinders (1) sowohl die Puffer- als auch die Entlastungsleitung für den Rückhubraum (14') bildet.

3. Zylinder nach Anspruch 1 oder 2, **dadurch gekennzeichnet,** daß der Geber (9) und das Zeitglied (10) einstellbar ausgebildet sind.

4. Zylinder nach einem der Ansprüche 1 bis 3, **dadurch gekennzeichnet,** daß am freien Endbereich der Kolbenstange (3) ein Traggestänge (18) und an diesem der Geber (9) angeordnet ist.

5. Zylinder nach Anspruch 4, **dadurch gekennzeichnet,** daß das Traggestänge (18) seitlich an der Außenwand des Zylinders (1) und am dort angeordneten Impulsgeber (11) vorbeiführend angeordnet und ausgebildet ist.

6. Zylinder nach einem der Ansprüche 2 bis 5,
**dadurch gekennzeichnet,**
daß seitlich am Zylinder (1) eine das Tragegestänge (18) mit Geber (11) und den Impulsgeber (11) abdeckende Abschirmhülse (19) angeordnet ist.

7. Werkzeugbetätigungszylinder mit Steuerventil, insbesondere für die Betätigung von Schweißelektroden, bestehend aus einem Zylinder (1) mit Kolben (2) und einseitig aus- und einfahrbarer Kolbenstange (3), wobei der zylinder mit ventilgesteuerten Betriebsmittelzu- und -abfuhranschlüssen (4, 5) versehen ist, die mit einem 5/2- Steuerventil (6) verbunden sind,
**dadurch gekennzeichnet,**
daß der Rückhubraum (14') des Zylinders (1) mit dem 5/2-Steuerventil (6) verbunden ist und der Arbeitsraum (14) mit einem mit Drucknetzanschluß (20) versehenen 2/2-Differenzdruckventil (21) und mit einem entgegengesetzt schaltbaren 2/2-Sperrventil (15) zwischen dem Differenzdruckventil (21) und dem 5/2-Steuerventil (6) und daß der Antrieb (6') des 5/2-Steuerventils (6), der Antrieb (15) und der Antrieb (21') des Differenzdruckventiles (21) mit einem einstellbaren Zeitglied versehenen Steuermodul (22) verbunden sind.

8. Zylinder nach Anspruch 7,
**dadurch gekennzeichnet,**
daß das 2/2-Sperrventil (15) und das 2/2-Differenzdruckventil (21) zu einem 3/2-Ventil (23) zusammengefaßt sind.

**Claims**

1. A cylindrical tool actuator including a pilot valve, in particular, for actuating welding electrodes, comprising a cylinder (1) with a piston (2) and a piston rod (3) one-sidedly extensible and retractable, with the cylinder being provided with valve-controlled connections (4,5) for the supply and discharge of operating fluid that are in communication with a 5-way/2-position control valve (6), characterized by the following features:
    1.1 disposed on the piston rod side connection (7) of the cylinder (1) is a counter-pressure pulse connection (8);
    1.2 disposed on cylinder (1), in the positioning path (ST) of a generator (9) provided at the end of the piston rod (3) is a pulse generator (11) provided with a timer (10);
    1.3 the counter pressure pulse connection (8) is in communciation with a 2-way/2-position buffer valve (13) provided with a pressure fluid nozzle (12) while the back stroke space (14') is in communication with a 2-way/2-position check valve (15) connected to the 5-way/2-positon control valve (6) and being switchable in the opposite direction, with the drive (13') of the 2-way/2-position valve (13) and the drive (15') of the 2-way/2-position valve (15) being connected to the pulse generator (11).

2. A cylinder according to claim 1, characterized in that the buffer and check valves (13,15) are designed as a combined 3-way/2-position valve (16), with the connection line (17) thereof leading across the control valve to the back stroke space (14') of the cylinder (1) forming both the buffer and the relief line for the back stroke space (14').

3. A cylinder according to claims 1 or 2, characterized in that the generator (9) and the timer (10) are of an adjustable design.

4. A clyinder according to any one of claims 1 to 3, characterized in that disposed on the free end of the piston rod (3) is a supporting rod (18) located on which is the generator (9).

5. A cylinder according to claim 4, characterized in that the supporting rod (18) is laterally disposed on the outer wall of the clyinder (11) and is designed to be guided past the pulse generator (1) provided thereon.

6. A cylinder according to any one of claims 2 to 5, characterized in that disposed laterally of the cylinder (1) is a shielding sleeve (19) covering the supporting rod (18) with the generator (11) and the pulse generator (11).

7. A cylindrical tool actuator including a control valve, in particular, for actuating welding electrodes, comprising a cylinder (1) with piston (2) and piston rod (3) one-sidedly extensible and retractable, with the cylinder being provided with valve-controlled connections (4,5) for the supply and discharge of operating fluid, that are in communication with a 5-way/2-position control valve (6), characterized in that the back stroke space (14') of the cylinder (1) is in communication with the 5-way/2-position control valve (6) and the working chamber (14) is in communication with a 2-way/2-position differential pressure valve (21) provided with a pressure mains connection (20) and with an oppositely switchable 2-way/2-position check valve (15) between the differential pressure valve (21) and the 5-way/2-position control valve (6), and that the drive (6') of the 5-way/2-position valve (6), the drive (15) and the drive (21') of the differential pressure valve (21) are in communication with a control module (22) provided with an adjustable timer.

8. A cylinder according to claim 7, characterized in that the 2-way/2-position check valve (15) and the 2-way/2-position differential pressure valve (21) are combmined to form a 3-way/2-positon valve (23).

**Revendications**

1. Vérin d'actionnement d'outil avec vanne-pilote, en particulier pour l'actionnement d'électrodes de soudure, constitué par un vérin (1) avec un piston (2) et une tige de piston (3) télescopique d'un côté, le vérin étant équipé de raccords d'arrivée et de décharge d'agent de fonctionnement (4, 5) commandés par vanne qui sont reliés à une vanne-pilote à cinq voies et deux positions de commutation (6), **caractérisé par** les caractéristiques suivantes :

   1.1 un raccord d'impulsion de contre-pression (8) est placé sur la fermeture (7) du côté de la tige de piston du vérin (1);
   1.2 un générateur d'impulsions (11) équipé d'un relais temporisateur (10) est placé sur le vérin (1) dans le parcours de réglage (ST) d'un transmetteur (9) placé dans la zone d'extrémité de la tige de piston (3) ;
   1.3 le raccord d'impulsion de contre-pression (8) est en relation avec une vanne-tampon à 2 voies et 2 positions de commutation (13) équipée d'un raccord pour l'agent de pression (12) et l'espace de la course de retour (14') avec une vanne d'arrêt à deux voies et deux positions de commutation (15) commutable en sens opposé, reliée à la vanne-pilote à cinq voies et deux positions de commutation (6), l'entraînement (13') de la vanne-tampon à deux voies et deux positions de commutation (13) et l'entraînement (15') de la vanne d'arrêt à deux voies et deux positions de commutation (15) étant reliés au générateur d'impulsions (11).

2. Vérin selon la revendication 1, **caractérisé en ce** que les vannes tampon et d'arrêt (13, 15) sont configurées en étant réunies en une vanne à trois voies et deux positions de commutation (16) dont la conduite de jonction (17) qui passe par la vanne-pilote (6) vers l'espace de la course de retour (14') du vérin (1) formant aussi bien la conduite tampon que la conduite de décharge pour l'espace de la course de retour (14').

3. Vérin selon la revendication 1 ou 2, **caractérisé en ce** que le transmetteur (9) et le relais (10) sont configurés en étant réglables.

4. Vérin selon l'une des revendications 1 à 3, **caractérisé en ce** que des tringles porteuses (18) sont placées dans la zone d'extrémité libre de la tige du piston (3) et que le transmetteur (9) est placé sur celles-ci.

5. Vérin selon la revendication 4, **caractérisé en ce** que les tringles porteuses (18) sont placées et configurées latéralement sur la paroi extérieure du vérin (1) en passant à côté du générateur d'impulsions (11) qui y est placé.

6. Vérin selon l'une des revendications 2 à 5, **caractérisé en ce** qu'une douille de blindage (19) qui recouvre les tringles porteuses (18) avec le transmetteur (9) et le générateur d'impulsions (11) est placée latéralement sur le vérin (1).

7. Vérin d'actionnement d'outil avec vanne-pilote, en particulier pour l'actionnement d'électrodes de soudure, constitué par un vérin (1) avec un piston (2) et une tige de piston (3) télescopique d'un côté, le vérin étant équipé de raccords d'arrivée et de décharge d'agent de fonctionnement (4, 5) commandés par vanne qui sont reliés à une vanne-pilote à cinq voies et deux positions de commutation (6), **caractérisé en ce** que l'espace de la course de retour (14') du vérin (1) est relié à la vanne-pilote à cinq voies et deux positions de commutation (6) et que l'espace de travail (14) est relié à une vanne de pression différentielle à deux voies et deux positions de commutation (21) et à une vanne d'arrêt à deux voies et deux positions de commutation (15), commutable en sens opposé, entre la vanne de pression différentielle (21) et la vanne-pilote à cinq voies et deux positions de commutation (6) et que l'entraînement (6') de la vanne à cinq voies et deux positions de commutation (6), l'entraînement (15) et l'entraînement (21') de la vanne de pression différentielle (21) sont reliés à un module de commande (22) équipé d'un relais de temporisation réglable.

8. Vérin selon la revendication 7,
   **caractérisé en ce**
   que la vanne d'arrêt à deux voies et deux positions de commutation (15) et la vanne de pression différentielle à deux voies et deux positions de commutation (21) sont réunies en une soupape à trois voies et deux positions de commutation (23).

FIG.1

FIG.2

FIG.3

FIG.4